# EUROPEAN PATENT APPLICATION

(11) **EP 1 852 879 A1**
(43) Date of publication of application: **07.11.2007**
(21) Application number: 07107352.2
(22) Date of filing: 02.05.2007
(51) Int. Cl.: H01G 4/018, H01G 4/32

(54) **High temperature capacitors and method of manufacturing the same**

(30) Priority: 05.05.2006 US 418763
(71) Applicant: General Electric Company, Schenectady, NY 12345 (US)
(72) Inventor: Irwin, Patricia Chapman, Altamont, NY 12009 (US); Cao, Yang, Niskayuna, NY 12309 (US); Tan, Qi, Rexford, NY 12148 (US); Younsi, Abdelkrim, Ballston Lake, NY 12019-1022 (US)
(74) Representative: Illingworth-Law, William Illingworth

(57) **Abstract**

A capacitor (10) including a dielectric layer made of polyetherimide film (22) having at least one fluorinated surface (24) is disclosed. The capacitor (10) also includes a metallized layer disposed on the fluorinated surface (24) of the polyetherimide film (22). The capacitor further includes an electrode (20) disposed on a side of the polyetherimide film (22) opposite the fluorinated surface (24). A method (28) for making a capacitor (10) is also disclosed. The method (28) includes plasma treating a surface of a polyetherimide film (22). The method (28) also includes metallizing the surface (24). The method (28) further includes disposing an electrode (20) on an opposite surface and finally packaging the capacitor (10).

## Description

### BACKGROUND

The invention relates generally to electrical capacitors, and more particularly to dielectric layers in film capacitors, such as to dielectric layers in metallized film capacitors.

Over the last decade, significant increases in capacitor reliability have been achieved through a combination of advanced manufacturing techniques and new materials. Greatly enhanced performance has been obtained particularly in so-called film capacitors. Film capacitors can be classified into three types based on the manufacturing technology, namely, film and foil capacitors, metallized film capacitors and mixed technology film capacitors.

Generally, metallized film capacitors consist of two metal electrodes separated by a layer of plastic film. The metallized plastic film are constructed by vacuum depositing metal film onto a layer of plastic film. This would offer compact capacitor structure, self-clearing capability, longer lifetime, and higher energy density. Some of the commonly used plastic films are polypropylene and polyetherimide films. The metal film layer is typically extremely thin, in the order of about 200-500 angstroms and is typically aluminum or zinc. Compared to other types of capacitors, metallized film capacitors have advantage in size, simplicity, and cost of manufacturing, and hence been widely used in the power electronics industry.

While significant improvements have been made in metallized film capacitors, certain issues, such as thermal stability and reduced lifetime continue to present challenges to their widespread adoption. For example, metallized film capacitors with polypropylene film as a dielectric layer are not suitable for operation above about 90°C.

Therefore, it would be desirable to design a metallized film capacitor that would address the aforementioned problems and meet the current demands of electronics industry applications.

### BRIEF DESCRIPTION

In accordance with one aspect of the invention, a method for making a capacitor is provided, including plasma treating a surface of a polyetherimide film. The method also includes metallizing the treated surface, followed by disposing an electrode on an opposite surface and finally packaging the capacitor.

In accordance with another aspect of the invention, a method for making a capacitor includes plasma treating a surface of a polyetherimide film in a fluorinated atmosphere. The method also includes metallizing the surface, and then, as before, disposing an electrode on an opposite surface and finally, packaging the capacitor.

In accordance with another aspect of the invention, a capacitor is provided that includes a dielectric layer made of polyetherimide film with at least one fluorinated surface. The capacitor also includes a metallized layer disposed on the fluorinated surface of the polyetherimide film, and an electrode disposed on a side of the polyetherimide film opposite the fluorinated surface.

### DRAWINGS

These and other features, aspects, and advantages of the present invention will become better understood when the following detailed description, provided by way of example only, is read with reference to the accompanying drawings in which like characters represent like parts throughout the drawings, wherein:
FIG. 1 is a diagrammatic illustration of an exemplary metallized film capacitor in accordance with aspects of the invention;
FIG. 2 is a cross-sectional view of a portion of a metallized film capacitor illustrating a plasma treated surface of a dielectric layer in accordance with one aspect of the invention;
FIG. 3 is a flow chart representing steps in an exemplary method of making a metallized film capacitor with a plasma treated surface of a dielectric layer as in FIG. 2, in accordance with one aspect of the invention;
FIG. 4 is a graphical comparison of breakdown voltage of a commercial polyetherimide film, a spin coated polyetherimide film and a polyetherimide film filled with a nanofiller aluminum oxide (Al₂O₃), all of which may be used in a high temperature metallized film capacitor as in FIG. 2, as a function of exposure time to the plasma;
FIG. 5 is a graphical representation of dielectric constant of improved polyetherimide film that may be used in a high temperature metallized film capacitor as in FIG. 2, as a function of frequency of applied signal; and
FIG. 6 is a graphical comparison of breakdown voltage as a function of temperature for improved polyetherimide film that may be used in a high temperature metallized film capacitor as in FIG. 2 and a non plasma treated biaxial oriented polypropylene film.

### DETAILED DESCRIPTION

As discussed in detail below, embodiments of the present invention include a metallized film capacitor with improved electrical properties and operable at high temperatures. A method of manufacturing such a film and film capacitor are also described. Some of the dielectric properties considered herein are dielectric constant, and breakdown voltage. The "dielectric constant" of a dielectric is a ratio of capacitance of a capacitor, in which the space between and around the electrodes is filled with the dielectric, to the capacitance of the same configuration of electrodes in a vacuum. As used herein, "breakdown voltage" refers to a measure of dielectric breakdown resistance of a dielectric material under an applied AC or DC voltage. The applied voltage prior to breakdown is divided by thickness of the dielectric material to give the breakdown voltage. It is generally measured in units of potential difference over units of length, such as kilovolts per millimeter (kV/mm). As used herein, the term "high temperatures" refers to temperatures above about 100 degrees Celsius (°C).

A typical metallized film capacitor includes a polymer film interposed between two electrodes on either side. The two electrodes include a layer of a metal such as aluminum, copper or zinc or their combination that is vacuum deposited on the polymer film that acts as a dielectric in the metallized film capacitor. In one embodiment of the present invention, a metallized film capacitor disclosed herein includes an electrode upon which a dielectric layer is disposed. The film capacitor also includes a plasma treated surface of the dielectric layer. Further, the film capacitor includes an electrode, typically made of a metal layer such as aluminum or zinc disposed (e.g., vacuum deposited) upon the plasma treated surface of the dielectric layer.

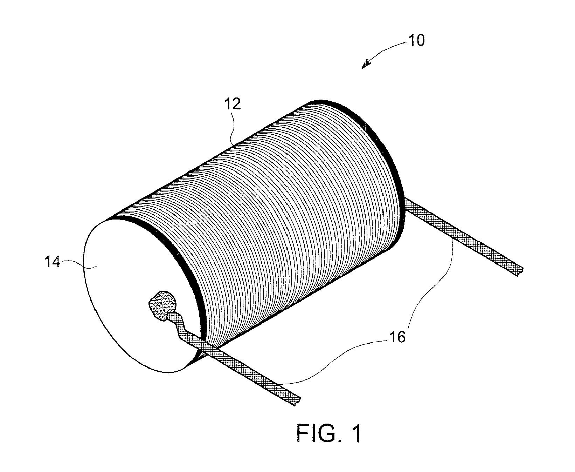

Turning now to the drawings, FIG. 1 is a diagrammatic illustration of a metallized film capacitor 10 in accordance with aspects of the invention. The metallized film capacitor 10 includes plastic foils 12 wound around a cylindrical surface 14 of the capacitor as final packaging. Lead wires 16 provide electrical connection for the metallized film capacitor 10 in a circuit. Technology used in the exemplary embodiment in constructing the metallized film capacitor is referred to as "wound" capacitor technology. In the "wound" capacitor technology, offset lengths of metallized foils are wound in a rolled cylinder. Metallized film capacitors in accordance with the invention are expected to provide electrical characteristics such as low dielectric loss factor and could be widely used for power electronics applications. Further details of certain predecessor metallized film capacitors with improved dielectric properties can be found in co-pending U.S. Patent Application Serial Number 11/286096 entitled "HIGH DIELECTRIC CONSTANT NANOCOMPOSITES", filed on Nov 23, 2005 and U.S. Patent Application Serial Number 11/273208 entitled "LAMINATED FILM CAPACITORS WITH HIGHER DIELECTRIC BREAKDOWN STRENGTH", filed on Nov 14, 2005, which are both assigned to the same assignee as the present invention, the entirety of which are hereby incorporated herein by reference herein.

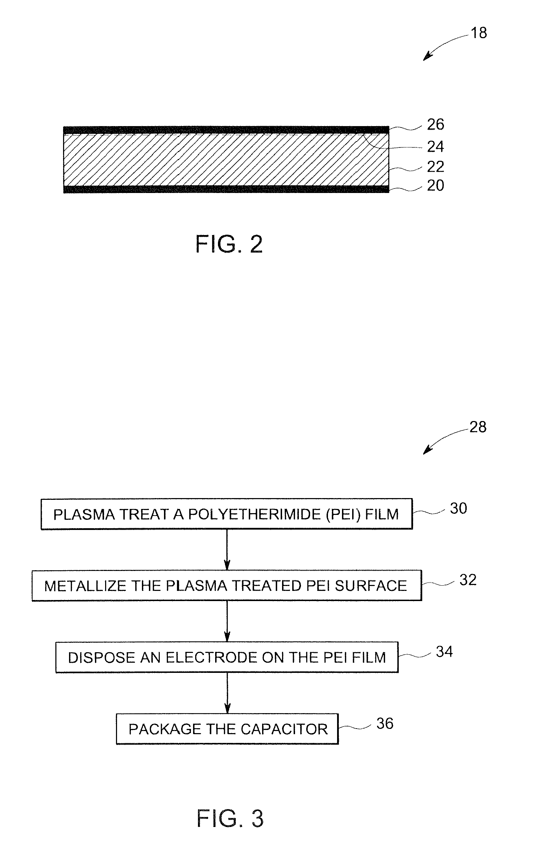

FIG. 2 represents a cross-sectional view of a portion of a metallized film capacitor 18 in accordance with the invention. The metallized film capacitor 18 includes an electrode 20, for example a cathode, upon which a dielectric layer 22 is disposed. In one example, the dielectric layer 22 is a polyetherimide film, including a plasma treated surface 24 opposite to the electrode 20. Further, a metallized layer 26 is disposed on the plasma treated surface 24, and acts as an anode.

The electrode 20 typically includes metal foils. In one embodiment, the electrode 20 includes at least one of aluminum, copper, or zinc foil. An example of a polyetherimide film used as the dielectric layer 22 may be a film product commercially available from General Electric Plastics under the designation Ultem®. An example of the plasma treated surface includes a surface fluorinated by carbon tetrafluoride. Thickness of the dielectric layer 22 may be in a range between about 0.5 µm to about 50 µm. In another exemplary embodiment, the thickness range of the dielectric layer 22 may vary between about 3µm to 10 µm. The dielectric layer 22 may operate in a temperature range between about -50°C to about 250°C. Breakdown voltage of the dielectric layer may be in a range between about 300-700kV/mm. The typical thickness of the metallized layer 26 varies in the range of about 200 Å to about 500 Å.

FIG. 3 is a flow chart illustrating exemplary steps involved in a method 28 of making a metallized film capacitor 18 as referenced to in FIG. 2, according to an aspect of the invention. The method 28 includes plasma treating on a surface of a polyetherimide film in a fluorinated atmosphere at step 30. Plasma treatment on a surface generally refers to a plasma reaction that either results in modification of a molecular structure of the surface or atomic substitution. In an exemplary embodiment, plasma surface treatment used herein includes plasma surface treatment with fluorinated species such as carbon tetrafluoride (CF₄) that induces substitution of hydrogen atoms in the surface with fluorine atoms. This enables in creation of a fluorinated structure that results in a greater chemical stability than in existing film capacitors. It is also believed that the treatment process may at least partially refine or smooth the surface of the film, resulting in more uniform distribution of charge during operation of the resulting capacitor, thereby reducing the potential for localized breakdown and failure. In another example, the plasma treatment process may include argon plasma treatment.

In a non-limiting example, the plasma surface treatment may include process of chemical vapor deposition. In another exemplary embodiment, the plasma surface treatment includes plasma treating on the surface of the polyetherimide film for duration of less than approximately 20 seconds. The dielectric material of the present invention may be coated in several ways. Suitable examples of coating processes include spin coating, dip coating, brush painting, solvent casting, and chemical vapor deposition.

The plasma treated surface is then metallized at step 32. The metallizing at step 32 may include process of vapor deposition, sputtering or electrochemical deposition of the polyetetherimide film. In an example, the process of vapor deposition, sputtering or electrochemical deposition may include depositing the surface of a polyetherimide film with aluminum or copper. In another example, the process of vapor deposition, sputtering or electrochemical deposition may include depositing the surface of the polyetherimide film with zinc and aluminum or copper. The method 28 also includes disposing an electrode on the polyetherimide film. Finally, the metallized film capacitor is packaged at step 36. The step 36 of packaging the capacitor will typically include winding and laminating the capacitor, and providing conductors or terminals for applying charge to the wound layers.

The aforementioned embodiments present clear advantages over existing film capacitors and methods for making such capacitors. For example, it has been found the capacitors made by the foregoing techniques offer increased dielectric constant compared to existing film capacitors, increased dielectric breakdown voltage, reduced surface defects, increased thermal stability, increased corona breakdown resistance, and extended life. Polymers containing certain nanoparticles or nanofillers such as aluminum oxide (Al₂O₃) or silica have been found to show higher breakdown strength and dielectric constant, and may be particularly well suited to the inventive films and capacitors. Particle filled polymers also could offer increased thermal conductivity and may be suitable for use in the invention. The higher glass transition temperature of polyetherimide films such as the commercially available Ultem® films mentioned above also allow a higher operating temperatures of the capacitors.

As mentioned above, surface defects may cause a scattering of breakdown voltages in a dielectric, resulting in varying breakdown voltages at various locations in a capacitor, leading to a lowering of the overall breakdown voltage of the capacitor. Plasma treatment of a surface of the dielectric film as described hereinabove provides greater uniformity in a surface structure thus reducing surface defects. This leads to a narrower breakdown voltage range and consequently, to enhancement and extension of the lifetime of the capacitor. Further, corona resistance, that is a measure of time that a dielectric in a capacitor will withstand a specified level of ionization without resulting in complete breakdown of the dielectric, is increased by such surface treatment. This directly results in an extended lifetime of the capacitor.

### EXAMPLES

The examples that follow are merely illustrative, and should not be construed to be any sort of limitation on the scope of the claimed invention.

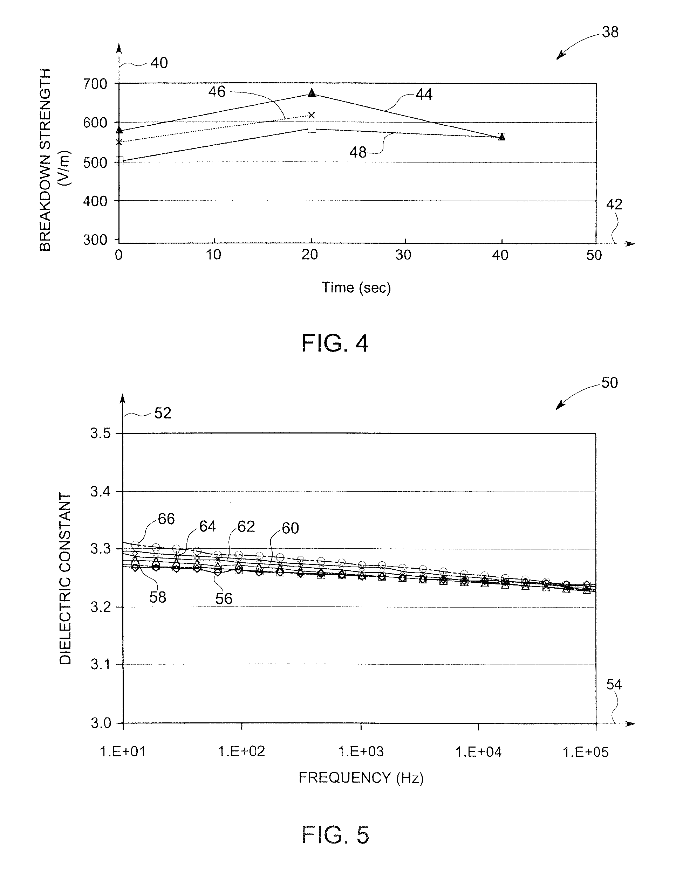

FIG. 4 is a graphical comparison 38 of breakdown strengths of a commercial polyetherimide film, a spin coated polyetherimide film, and a polyetherimide film filled with a nanofiller such as aluminum oxide (Al₂O₃), all of which may be used in a high temperature metallized film capacitor as in FIG. 2, as a function of exposure time to plasma. The Y-axis 40 represents the breakdown strength in volts per meter. The X-axis 42 represents time in seconds. A sample of commercial polyetherimide film of a thickness of 15 µm was plasma treated in the presence of CF₄ and measurements were made for the breakdown voltage as a function of exposure time to the CF₄ as shown by plot 44. Similarly, plots 46 and 48 represent measurements made on a plasma treated spin coated sample of polyetherimide film and a plasma treated polyetherimide film filled with a nanofiller such as aluminum oxide respectively.

As seen from the plots 44, 46 and 48, a plasma treated spin coated sample of polyetherimide film provides a higher breakdown voltage than that of a plasma treated nanofilled polyetherimide film and a plasma treated commercial polyetherimide sample. For all the three samples investigated, plasma treatment offers improved dielectric breakdown strength against untreated samples with an optimal treatment duration of 20 s. However, process of plasma treatment appears to be most effective on a spin coated polyetherimide film.

FIG. 5 is a graphical comparison 50 of dielectric constant as a function of applied frequency of a metallized film capacitor filled with plasma treated polyetherimide film as in FIG. 2, operating at temperatures varying from 30°C to 200°C. Y-axis 52 represents the dielectric constant, which is a dimensionless quantity. X-axis 54 represents the applied frequency measured in Hz. Plots 56, 58, 60, 62, 64 and 66 represent the variation of dielectric constant of the capacitor filled with plasma treated polyetherimide film as a dielectric with applied frequencies at 30°C, 50°C, 100°C, 150°C, 180°C and 210°C respectively. The dielectric constant varies between 3.2 and 3.3 over the range of frequencies at the above-mentioned temperature ranges. This indicates stability of a capacitor filled with plasma treated polyetherimide film as a dielectric over a wide range of applied frequencies at varying temperatures.

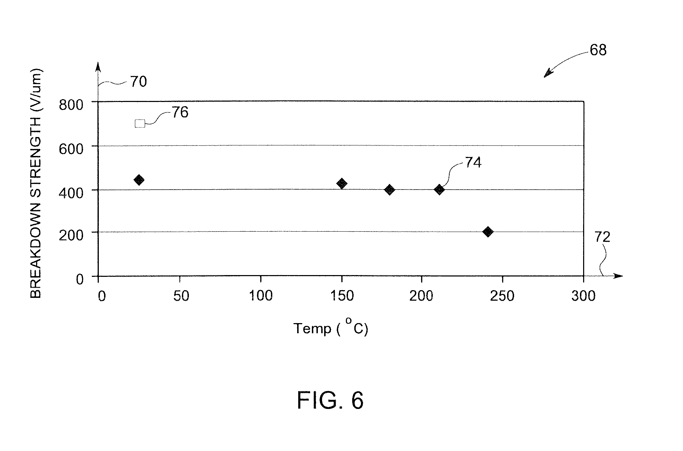

FIG. 6 is a graphical comparison 68 of thermal stability of plasma treated polyetherimide film that may be used in a high temperature metallized film capacitor as in FIG. 2, with that of a non plasma treated biaxial oriented commercial polypropylene film. Y-axis 70 represents breakdown strength measured in volts per micrometer (V/µm). X-axis 72 represents temperature measured in °C. Plot 74 represents measurements made for plasma treated polyetherimide film at temperatures varying from about 30°C to about 250°C. Plot 76 is a single measurement of a non plasma treated commercial polypropylene film at about 30°C. Since commercial polypropylene film is not operable over about 90°C, no further measurements were made. As seen in plot 74, the breakdown strength of plasma treated polyetherimide film seems to be stable over the temperature range, thus illustrating a desirable thermal stability of plasma treated polyetherimide film.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method for making a capacitor (10) comprising:
plasma treating a surface (24) of a polyetherimide film (22);
metallizing the surface (24);
disposing an electrode (20) on the polyetehrimide film; and
packaging the capacitor (10).

2. The method of claim 1, the plasma treating comprising a process of chemical vapor deposition.

3. The method of claim 1, the plasma treating comprising plasma treating in a fluorinated atmosphere or argon plasma treating.

4. The method of claim 1, the metallizing comprising a process of vapor deposition, sputtering or electrochemical deposition of the polyetherimide film (22).

5. The method of claim 4, the process of vapor deposition, sputtering, or electrochemical deposition comprising depositing the surface (24) of the polyetherimide film (22) with aluminum or copper.

6. A method for making a capacitor (10) comprising:
plasma treating a surface (24) of a polyetherimide film (22) in a fluorinated atmosphere;
metallizing the surface (24);
disposing an electrode (20) on the polyetehrimide film (22); and
packaging the capacitor (10).

7. The method of claim 6, the fluorinated atmosphere comprising carbon tetrafluoride.

8. A capacitor (10) comprising:
a dielectric layer made of polyetherimide film (22), the polyetherimide film comprising at least one fluorinated surface;
a metallized layer (32) disposed on the fluorinated surface of the polyetherimide film (22); and
an electrode (20) disposed on a side of the polyetherimide film (22).

9. The capacitor (10) of claim 8, wherein the dielectric layer (22) has an operating temperature in the range between about -50°C to about 250°C.

10. The capacitor (10) of claim 8, wherein the dielectric layer (22) has a breakdown voltage in the range between about 300-700kV/mm.
